# EUROPÄISCHE PATENTANMELDUNG

(11) **EP 4 144 581 A1**
(43) Veröffentlichungstag der Anmeldung: **08.03.2023**
(21) Anmeldenummer: 21194244.6
(22) Anmeldetag: 01.09.2021
(51) Int. Cl.: B60P 1/02, B62D 33/00

(54) **FAHRZEUG UND VERFAHREN ZUM BETRIEB EINES FAHRZEUGS**

(71) Anmelder: Schmitz Cargobull AG, 48341 Altenberge (DE)
(72) Erfinder: Mildner, Christian, 99848 Wutha-Farnroda (DE); Hey, Jeffrey, 99867 Gotha (DE)
(74) Vertreter: Liedtke & Partner Patentanwälte

(57) **Zusammenfassung**

Die Erfindung betrifft ein Fahrzeug (1) mit einem in seiner Höhe verstellbaren aktiven Fahrwerk (6) und eine Steuervorrichtung (8), welche ausgebildet ist, bei Initiierung eines Kippvorgangs des Ladegutbehälters (4) um eine Querkippachse (XQ) in Abhängigkeit einer Fahrzeugseitenneigung (a) das aktive Fahrwerk (6) zur Minimierung der Fahrzeugseitenneigung (a) anzusteuern. Alternativ oder zusätzlich umfasst das Fahrzeug (1) eine Seitenkippvorrichtung zum Kippen des Ladegutbehälters (4) zumindest im Wesentlichen parallel zu einer Behälterlängsachse (YB) relativ zum Fahrgestell (5) und eine Steuervorrichtung (8), welche ausgebildet ist, bei Initiierung des Kippvorgangs des Ladegutbehälters (4) um die Querkippachse (XQ) in Abhängigkeit der Fahrzeugseitenneigung (a) die Seitenkippvorrichtung zur Minimierung der Fahrzeugseitenneigung (a) anzusteuern.

Die Erfindung betrifft weiterhin ein Verfahren zum Betrieb eines Fahrzeugs (1).

## Beschreibung

Die Erfindung betrifft ein Fahrzeug gemäß dem Oberbegriff des Anspruchs 1.

Die Erfindung betrifft weiterhin ein Verfahren zum Betrieb eines Fahrzeugs gemäß dem Oberbegriff des Anspruchs 9.

Aus der EP 2 781 403 A2 ist eine Vorrichtung zur Überwachung einer Entladung eines Kippfahrzeugs bekannt. Die Vorrichtung umfasst einen mit einer Ladung zu füllenden Kippaufbau und eine mit dem Kippaufbau verbundene Sensoreinrichtung. Die Sensoreinrichtung ist geeignet, einen Schwerpunkt des Kippaufbaus beim Kippen des Kippaufbaus zu bestimmen, um das Entladen der Ladung festzustellen. Dabei bestimmt die Sensoreinrichtung eine Gewichtskraft des Kippaufbaus und einen Kippwinkel des Kippaufbaus zu dem Kippfahrzeug. Weiterhin bestimmt die Sensoreinrichtung an einem ersten Punkt des Kippaufbaus und an einem vom ersten Punkt verschiedenen zweiten Punkt jeweils eine Gewichtskraft des Kippaufbaus. Die Sensoreinrichtung umfasst zur Bestimmung der Gewichtskraft eine Messeinrichtung einer Luftdruckfederung, die einen Luftdruck der Luftfederung bestimmt. Weiterhin ist die Sensoreinrichtung mit einem Neigungswinkelsensor verbunden, der eine Seitenneigung des Kippfahrzeugs ausgibt. In Abhängigkeit der Seitenneigung wird ein maximaler Kippwinkel des Kippaufbaus gewählt.

Der Erfindung liegt die Aufgabe zu Grunde, ein neuartiges Fahrzeug und ein neuartiges Verfahren zum Betrieb eines Fahrzeugs anzugeben.

Die Aufgabe wird erfindungsgemäß gelöst durch ein Fahrzeug, welches die im Anspruch 1 angegebenen Merkmale aufweist, und durch ein Verfahren, welches die im Anspruch 9 angegebenen Merkmale aufweist.

Vorteilhafte Ausgestaltungen der Erfindung sind Gegenstand der Unteransprüche.

Ein Fahrzeug umfasst einen um eine zumindest im Wesentlichen parallel zu einer Behälterquerachse verlaufende Querkippachse relativ zu einem Fahrgestell kippbaren Ladegutbehälter und eine Neigungsermittlungsvorrichtung zur Ermittlung einer Fahrzeugseitenneigung um eine Fahrzeuglängsachse.

Erfindungsgemäß umfasst das Fahrzeug ein in seiner Höhe verstellbares aktives Fahrwerk und eine Steuervorrichtung, welche ausgebildet ist, bei Initiierung eines Kippvorgangs des Ladegutbehälters um die Querkippachse in Abhängigkeit der Fahrzeugseitenneigung das aktive Fahrwerk zur Minimierung der Fahrzeugseitenneigung anzusteuern. Alternativ oder zusätzlich umfasst das Fahrzeug eine Seitenkippvorrichtung zum Kippen des Ladegutbehälters zumindest im Wesentlichen parallel zu einer Behälterlängsachse relativ zum Fahrgestell und eine Steuervorrichtung, welche ausgebildet ist, bei Initiierung des Kippvorgangs des Ladegutbehälters um die Querkippachse in Abhängigkeit der Fahrzeugseitenneigung die Seitenkippvorrichtung zur Minimierung der Fahrzeugseitenneigung anzusteuern.

Die Ausbildung des Fahrzeugs, insbesondere eines Nutzfahrzeugs, ermöglicht in einfacher und zuverlässiger Weise eine Stabilisierung desselben gegen ein Kippen bzw. Umkippen beim Kippen des Ladegutbehälters, beispielsweise bei einer Entladung desselben, auf einem geneigten Untergrund. Der Ladegutbehälter ist beispielsweise eine so genannte Kippmulde. Insbesondere bei einer Nutzung des aktiven Fahrwerks zur Minimierung der Fahrzeugseitenneigung ist die Kippstabilisierung mit besonders geringem Material- und Kostenaufwand realisierbar. Auch besteht hierbei eine Nachrüstmöglichkeit für bereits im Betrieb befindliche Fahrzeuge. Auch ist die Seitenkippvorrichtung mit geringem Materialund Kostenaufwand realisierbar.

Das Fahrzeug kann dabei beispielsweise
- ein Nutzfahrzeug, beispielsweise ein Lastkraftwagen, mit einem als Aufbau ausgebildeten Ladegutbehälter,
- ein Fahrzeuggespann mit einem Zugfahrzeug und zumindest einem Anhänger, wobei das Zugfahrzeug und/oder der Anhänger den Ladegutbehälter, das Fahrgestell und zumindest einen Teil des aktiven Fahrwerks und/oder die Seitenkippvorrichtung umfassen können,
- ein Sattelzug mit einer Zugmaschine und einem Sattelauflieger, wobei der Sattelauflieger den Ladegutbehälter, das Fahrgestell und zumindest einen Teil des aktiven Fahrwerks und/oder die Seitenkippvorrichtung umfassen kann und/oder die Zugmaschine das Fahrgestell und zumindest einen Teil des aktiven Fahrwerks und/oder die Seitenkippvorrichtung umfassen kann, oder
- ein Anhänger, beispielsweise Starrdeichselanhänger, Gelenkdeichselanhänger, Sattelanhänger bzw. Sattelauflieger oder jede andere Art von Anhänger,
sein.

In einer möglichen Ausgestaltung des Fahrzeugs ist das aktive Fahrwerk hydraulisch, pneumatisch und/oder elektrisch in seiner Höhe verstellbar. Dies ermöglicht eine Nutzung bereits in großer Menge in Fahrzeugen verbauter aktiver Fahrwerke zur Minimierung der Fahrzeugseitenneigung und zur Erhöhung der Kippstabilität, wobei sich derartige aktive Fahrwerke besonders zur Höhenverstellung und Minimierung der Fahrzeugseitenneigung eignen. Somit ist die Kippstabilisierung sehr kostengünstig und mit besonders geringem Aufwand realisierbar.

In einer weiteren möglichen Ausgestaltung des Fahrzeugs umfasst das aktive Fahrwerk ein Luftfedersystem. Ein solches Luftfedersystem kommt in Nutzfahrzeugen sehr häufig zur Anwendung und eignet sich besonders zur Höhenverstellung und Minimierung der Fahrzeugseitenneigung. Beispielsweise können bei einer solchen Ausführung des aktiven Fahrwerks in einfacher Weise so genannte Luftfederbälge mittels einer Ventilsteuerung zum Ausgleich der Fahrzeugseitenneigung angesteuert werden. Dies kann dabei für die Luftfederbälge einzeln oder in Gruppen, beispielsweise seitenweise, erfolgen. Bei dieser Ansteuerung erfolgt eine Zufuhr von Luft in zumindest einen Luftfederbalg zum Anheben einer Seite des Fahrzeugs und/oder ein Ablassen von Luft aus zumindest einem Luftfederbalg zum Absenken einer Seite des Fahrzeugs.

In einer weiteren möglichen Ausgestaltung des Fahrzeugs ist die Seitenkippvorrichtung in zumindest ein zum Kippen des Ladegutbehälters parallel zur Querkippachse vorgesehenes Querkipplager integriert oder steht mit diesem in mechanischem Wirkzusammenhang oder ist in mechanischen Wirkzusammenhang mit diesem bringbar. Die Seitenkippvorrichtung ist dabei ausgebildet, eine Position und/oder Ausrichtung des Querkipplagers relativ zum Fahrgestell zu ändern. Eine solche Ausbildung der Seitenkippvorrichtung ermöglicht einerseits eine bauraumsparende Anordnung und andererseits können besonders große Wege zum Ausgleich der Fahrzeugseitenneigung realisiert werden.

In einer weiteren möglichen Ausgestaltung des Fahrzeugs sind eine Zugmaschine und ein Sattelauflieger vorgesehen, wobei der Sattelauflieger den kippbaren Ladegutbehälter, das Fahrgestell und zumindest einen Teil des aktiven Fahrwerks und/oder die Seitenkippvorrichtung umfasst. Weiterhin ist eine Knickwinkelermittlungsvorrichtung zur Ermittlung eines zwischen der Zugmaschine und dem Sattelauflieger ausgebildeten Knickwinkels vorgesehen und die Steuervorrichtung ist ausgebildet, bei der Ansteuerung des aktiven Fahrwerks und/oder der Seitenkippvorrichtung zur Minimierung der Fahrzeugseitenneigung den Knickwinkel zu berücksichtigen. Da der Knickwinkel zusätzlich zur Fahrzeugseitenneigung einen großen Einfluss auf die Kippstabilität desselben hat, kann durch Berücksichtigung des Knickwinkels bei der Kippstabilisierung eine Sicherheit des Fahrzeugs gegen ein Umkippen weiter erhöht werden.

In einer weiteren möglichen Ausgestaltung des Fahrzeugs ist eine Kippwinkelermittlungsvorrichtung zur Ermittlung eines Kippwinkels des Ladegutbehälters um die Querkippachse vorgesehen, wobei die Steuervorrichtung ausgebildet ist, bei der Ansteuerung des aktiven Fahrwerks und/oder der Seitenkippvorrichtung zur Minimierung der Fahrzeugseitenneigung den Kippwinkel um die Querkippachse zu berücksichtigen. Da mit steigendem Kippwinkel bei vorhandener Fahrzeugseitenneigung eine Hebelwirkung des Ladegutbehälters erhöht wird und somit die Größe des Kippwinkels einen großen Einfluss auf die Kippstabilität desselben hat, kann durch Berücksichtigung des Kippwinkels bei der Kippstabilisierung eine Sicherheit des Fahrzeugs gegen ein Kippen weiter erhöht werden. Beispielsweise kann so bei Überschreitung eines in Abhängigkeit der Fahrzeugseitenneigung kritischen Kippwinkels das Kippen des Ladegutbehälters gestoppt werden und so ein Umkippen des Fahrzeugs sicher verhindert werden.

In einer weiteren möglichen Ausgestaltung des Fahrzeugs umfasst die Neigungsermittlungsvorrichtung einen Beschleunigungssensor zur Ermittlung einer Fahrzeugquerbeschleunigung, welcher beispielsweise Bestandteil eines elektronischen Bremssystems des Fahrzeugs ist. Die Steuervorrichtung ist ausgebildet, aus der Fahrzeugquerbeschleunigung die Fahrzeugseitenneigung zu ermitteln. Somit kann auch zur Ermittlung der Fahrzeugseitenneigung eine bereits in einem Großteil von Fahrzeugen verbaute Sensorik verwendet werden, so dass die Kippstabilisierung besonders einfach mit geringem Kosten- und Materialaufwand realisierbar ist. Weiterhin kann mittels vom Beschleunigungssensor erfasster Daten die Fahrzeugseitenneigung besonders exakt, einfach und zuverlässig ermittelt werden.

In einer weiteren möglichen Ausgestaltung des Fahrzeugs ist die Steuervorrichtung ausgebildet, in Abhängigkeit von bei der Initiierung des Kippvorgangs des Ladegutbehälters um die Querkippachse und/oder während des Kippvorgangs des Ladegutbehälters um die Querkippachse erfassten Werten der Fahrzeugseitenneigung und/oder weiteren, eine Fahrzeugkippgefahr beeinflussenden Faktoren, die Fahrzeugkippgefahr zu ermitteln und dann, wenn die Fahrzeugkippgefahr einen vorgegebenen Schwellwert überschreitet, den Kippvorgang automatisch zu stoppen, zu reversieren und/oder eine entsprechende Information auszugeben. Somit kann ein Umkippen des Fahrzeugs beim Kippen des Ladegutbehälters, insbesondere auch bei sich ändernden Bedingungen, sicher vermieden werden. Solche sich ändernden Bedingungen können sich beispielsweise aus einem Abrutschen des Fahrzeugs, zum Beispiel bei glattem, losem und/oder matschigem Untergrund, ergeben und werden sicher durch die Überwachung der Fahrzeugseitenneigung und/oder der weiteren, die Fahrzeugkippgefahr beeinflussenden Faktoren erfasst.

In einem Verfahren zum Betrieb eines Fahrzeugs, bei welchem ein Ladegutbehälter um eine zumindest im Wesentlichen parallel zu einer Behälterquerachse verlaufende Querkippachse relativ zu einem Fahrgestell kippbar ist, wird eine Fahrzeugseitenneigung ermittelt.

Erfindungsgemäß wird bei Initiierung eines Kippvorgangs des Ladegutbehälters um die Querkippachse und bei Überschreiten eines vorgegebenen Schwellwerts der Fahrzeugseitenneigung mittels eines in seiner Höhe verstellbaren aktiven Fahrwerks die Fahrzeugseitenneigung verringert. Alternativ oder zusätzlich wird mittels einer Seitenkippvorrichtung der Ladegutbehälter zumindest im Wesentlichen parallel zu einer Behälterlängsachse relativ zum Fahrgestell entgegen der Fahrzeugseitenneigung gekippt.

Das Verfahren ermöglicht in einfacher und zuverlässiger Weise eine Stabilisierung des Fahrzeugs gegen ein Kippen bzw. Umkippen beim Kippen des Ladegutbehälters, beispielsweise bei einer Entladung desselben. Insbesondere bei einer Nutzung des aktiven Fahrwerks zur Minimierung der Fahrzeugseitenneigung ist die Kippstabilisierung mit besonders geringem Material- und Kostenaufwand realisierbar. Auch besteht hierbei eine Nachrüstmöglichkeit für bereits im Betrieb befindliche Fahrzeuge. Jedoch ist auch die Seitenkippvorrichtung mit geringem Material- und Kostenaufwand realisierbar.

In einer weiteren Ausgestaltung des Verfahrens wird das aktive Fahrwerk hydraulisch, pneumatisch und/oder elektrisch in seiner Höhe verstellt. Dies ermöglicht eine Nutzung bereits in großer Menge in Fahrzeugen verbauter aktiver Fahrwerke zur Minimierung der Fahrzeugseitenneigung und zur Erhöhung der Kippstabilität, wobei sich derartige aktive Fahrwerke besonders zur Höhenverstellung und Minimierung der Fahrzeugseitenneigung eignen. Somit ist die Kippstabilisierung sehr kostengünstig und mit besonders geringem Aufwand realisierbar.

In einer weiteren möglichen Ausgestaltung des Verfahrens wird mittels der Seitenkippvorrichtung eine Position und/oder Ausrichtung des Querkipplagers relativ zum Fahrgestell geändert. Hierbei können bei einer bauraumsparenden Anordnung besonders große Wege zum Ausgleich der Fahrzeugseitenneigung realisiert werden.

In einer weiteren möglichen Ausgestaltung des Verfahrens wird ein Knickwinkel zwischen einer Zugmaschine und einem Sattelauflieger des Fahrzeugs, welcher den kippbaren Ladegutbehälter, das Fahrgestell und zumindest einen Teil des aktiven Fahrwerks und/oder die Seitenkippvorrichtung umfasst, ermittelt. Bei der Ansteuerung des aktiven Fahrwerks und/oder der Seitenkippvorrichtung zur Minimierung der Fahrzeugseitenneigung wird der Knickwinkel berücksichtigt. Da der Knickwinkel zusätzlich zur Fahrzeugseitenneigung einen großen Einfluss auf die Kippstabilität desselben hat, kann durch Berücksichtigung des Knickwinkels bei der Kippstabilisierung eine Sicherheit des Fahrzeugs gegen ein Umkippen weiter erhöht werden.

In einer weiteren möglichen Ausgestaltung des Verfahrens wird ein Kippwinkel des Ladegutbehälters um die Querkippachse ermittelt, wobei bei der Ansteuerung des aktiven Fahrwerks und/oder der Seitenkippvorrichtung zur Minimierung der Fahrzeugseitenneigung der Kippwinkel berücksichtigt wird. Da mit steigendem Kippwinkel bei vorhandener Fahrzeugseitenneigung eine Hebelwirkung des Ladegutbehälters erhöht wird und somit die Größe des Kippwinkels einen großen Einfluss auf die Kippstabilität desselben hat, kann durch Berücksichtigung des Kippwinkels bei der Kippstabilisierung eine Sicherheit des Fahrzeugs gegen ein Kippen weiter erhöht werden. Beispielsweise kann so bei Überschreitung eines in Abhängigkeit der Fahrzeugseitenneigung kritischen Kippwinkels das Kippen des Ladegutbehälters gestoppt werden und so ein Umkippen des Fahrzeugs sicher verhindert werden.

In einer weiteren möglichen Ausgestaltung des Verfahrens wird die Fahrzeugseitenneigung anhand einer Fahrzeugquerbeschleunigung ermittelt. Somit kann zur Ermittlung der Fahrzeugseitenneigung eine bereits in einem Großteil von Fahrzeugen verbaute Beschleunigungssensorik verwendet werden, so dass die Kippstabilisierung besonders einfach mit geringem Kosten- und Materialaufwand realisierbar ist. Weiterhin kann mittels der Fahrzeugquerbeschleunigung die Fahrzeugseitenneigung besonders exakt, einfach und zuverlässig ermittelt werden.

In einer weiteren möglichen Ausgestaltung des Verfahrens werden bei der Initiierung des Kippvorgangs des Ladegutbehälters um die Querkippachse und/oder während des Kippvorgangs des Ladegutbehälters um die Querkippachse Werte der Fahrzeugseitenneigung und/oder weitere, eine Fahrzeugkippgefahr beeinflussende Faktoren ermittelt. Anhand der Werte der Fahrzeugseitenneigung und/oder der weiteren Faktoren wird die Fahrzeugkippgefahr ermittelt, wobei dann, wenn die Fahrzeugkippgefahr einen vorgegebenen Schwellwert überschreitet, der Kippvorgang automatisch gestoppt, reversiert und/oder eine entsprechende Information ausgegeben werden/wird. Somit kann ein Umkippen des Fahrzeugs beim Kippen des Ladegutbehälters, insbesondere auch bei sich ändernden Bedingungen, sicher vermieden werden. Solche sich ändernden Bedingungen können sich beispielsweise aus einem Abrutschen des Fahrzeugs, zum Beispiel bei glattem, losem und/oder matschigem Untergrund, ergeben und werden sicher durch die Überwachung der Fahrzeugseitenneigung und/oder der weiteren, die Fahrzeugkippgefahr beeinflussenden Faktoren erfasst.

Ausführungsbeispiele der Erfindung werden im Folgenden anhand von Zeichnungen näher erläutert.

Darin zeigen:
- Figur 1: schematisch eine Frontansicht eines Fahrzeugs in einem ersten Zustand,
- Figur 2: schematisch eine Frontansicht des Fahrzeugs gemäß Figur 1 in einem zweiten Zustand,
- Figur 3: schematisch eine Vorrichtung eines Fahrzeugs und
- Figur 4: schematisch eine Seitenansicht eines Sattelaufliegers.

Einander entsprechende Teile sind in allen Figuren mit den gleichen Bezugszeichen versehen.

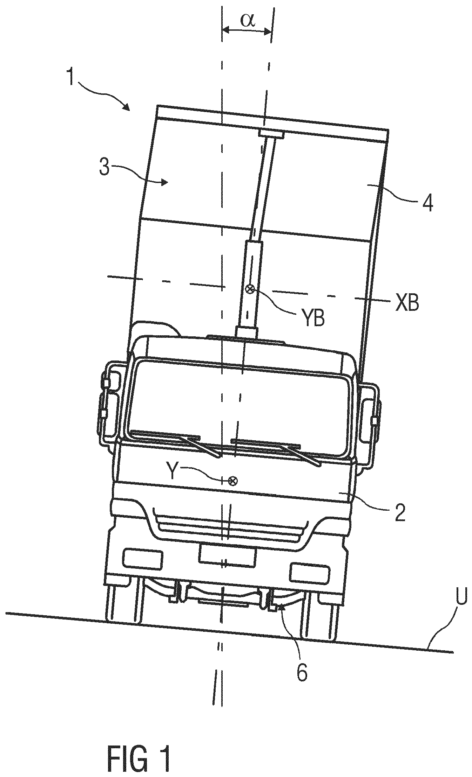

**Figur 1** zeigt eine Frontansicht eines Fahrzeugs 1 in einem ersten Zustand. Das Fahrzeug 1 umfasst eine Zugmaschine 2 und einen Sattelauflieger 3, wobei der Sattelauflieger 3 einen kippbaren Ladegutbehälter 4 umfasst. Das Fahrzeug 1 befindet sich auf einem geneigten Untergrund U, so dass eine Fahrzeugseitenneigung α um eine Fahrzeuglängsachse Y auftritt.

Abweichend zur Darstellung kann das Fahrzeug 1
- ein Nutzfahrzeug, beispielsweise ein Lastkraftwagen, mit einem als Aufbau ausgebildeten Ladegutbehälter 4,
- ein Fahrzeuggespann mit einem Zugfahrzeug und zumindest einem Anhänger oder
- ein Anhänger, beispielsweise Starrdeichselanhänger, Gelenkdeichselanhänger, Sattelanhänger bzw. Sattelauflieger 3 oder jede andere Art von Anhänger
sein.

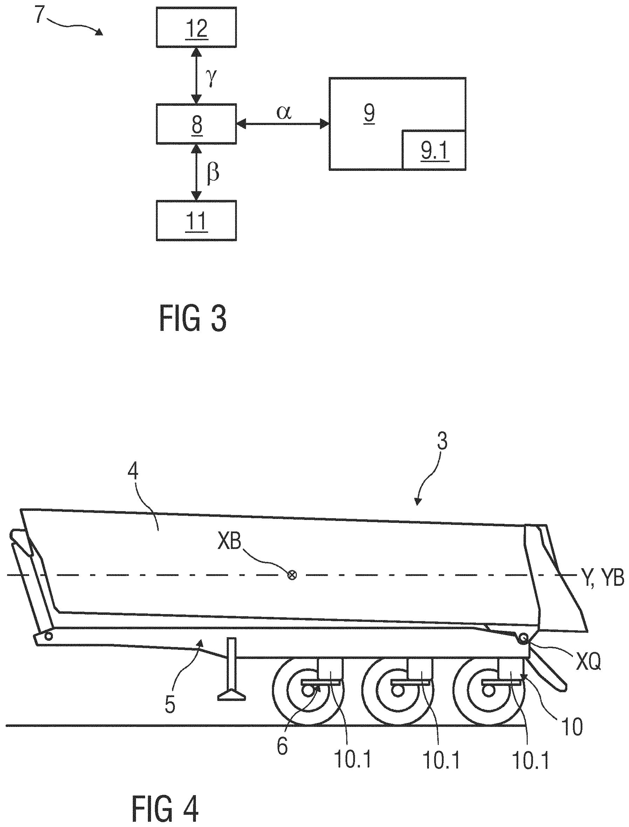

Wie dargestellt, besteht insbesondere bei einem Kippen des Ladegutbehälters 4 um eine zumindest im Wesentlichen parallel zu einer Behälterquerachse XB verlaufende und in Figur 4 dargestellte Querkippachse XQ relativ zu einem in Figur 4 näher dargestellten Fahrgestell 5 und bei gleichzeitiger Fahrzeugseitenneigung durch eine Verschiebung eines Schwerpunkts des Fahrzeugs 1 nach oben die Gefahr eines seitlichen Kippens bzw. Umkippens desselben. Diese Gefahr steigt mit wachsendem Kippwinkel γ (dargestellt in Figur 3) zwischen Ladegutbehälter 4 und Fahrgestell 5.

Um diese Gefahr zu minimieren, ist vorgesehen, dass mittels eines in seiner Höhe verstellbaren aktiven Fahrwerks 6 die Fahrzeugseitenneigung α zumindest bei einem Kippvorgang des Ladegutbehälters 4 verringert wird.

In einem nicht näher dargestellten Ausführungsbeispiel kann das Fahrzeug 1 alternativ oder zusätzlich eine Seitenkippvorrichtung zum Kippen des Ladegutbehälters 4 zumindest im Wesentlichen parallel zu einer Behälterlängsachse YB relativ zum Fahrgestell 5 umfassen, um die Fahrzeugseitenneigung α zu verringern.

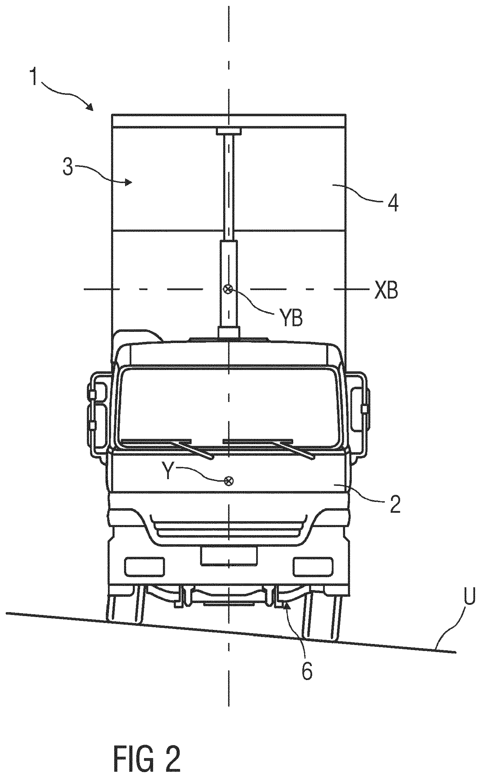

Das Ergebnis dieser mittels des aktiven Fahrwerks 6 und/oder mittels der Seitenkippvorrichtung durchgeführten Verringerung zeigt **Figur 2****,** in welcher eine Frontansicht des Fahrzeugs 1 gemäß Figur 1 in einem zweiten Zustand ohne Seitenneigung α dargestellt ist. **Figur 3** zeigt ein Blockschaltbild einer Vorrichtung 7 des Fahrzeugs 1 zur Steuerung des aktiven Fahrwerks 6 und/oder der Seitenkippvorrichtung zur Verringerung der Fahrzeugseitenneigung α.

Die Vorrichtung 7 umfasst eine Steuervorrichtung 8, welche ausgebildet ist, bei Initiierung eines Kippvorgangs des Ladegutbehälters 4 um die Querkippachse XQ in Abhängigkeit der Fahrzeugseitenneigung α das aktive Fahrwerk 6 und/oder die Seitenkippvorrichtung zur Minimierung der Fahrzeugseitenneigung α anzusteuern.

Das aktive Fahrwerk 6 ist dabei beispielsweise hydraulisch, pneumatisch und/oder elektrisch in seiner Höhe verstellbar. Beispielsweise umfasst das aktive Fahrwerk 6 ein in Figur 4 näher dargestelltes Luftfedersystem 10.

Beispielsweise ist die Seitenkippvorrichtung in zumindest ein zum Kippen des Ladegutbehälters 4 parallel zur Querkippachse XQ vorgesehenes Querkipplager integriert oder steht mit diesem in mechanischem Wirkzusammenhang oder ist mit diesem in mechanischen Wirkzusammenhang bringbar . Bei dieser Ausführung ist die Seitenkippvorrichtung ausgebildet, eine Position und/oder Ausrichtung des Querkipplagers relativ zum Fahrgestell 5 zu ändern.

Weiterhin umfasst die Vorrichtung 7 eine Neigungsermittlungsvorrichtung 9 zur Ermittlung der Fahrzeugseitenneigung α. Beispielsweise weist die Neigungsermittlungsvorrichtung 9 einen Beschleunigungssensor 9.1 eines elektronischen Bremssystems des Fahrzeugs 1 zur Ermittlung einer Fahrzeugquerbeschleunigung auf. In diesem Fall ist beispielsweise die Steuervorrichtung 8 ausgebildet, aus der Fahrzeugquerbeschleunigung die Fahrzeugseitenneigung α und/oder, falls davon abweichend, eine Ladegutbehälterseitenneigung zu ermitteln.

Weiterhin umfasst die Vorrichtung 7 in einer möglichen Ausgestaltung eine Kippwinkelermittlungsvorrichtung 12 zur Ermittlung des Kippwinkels γ des Ladegutbehälters 4 um die Querkippachse XQ. In dieser Ausgestaltung ist die Steuervorrichtung 8 ausgebildet, bei der Ansteuerung des aktiven Fahrwerks 6 und/oder der Seitenkippvorrichtung zur Minimierung der Fahrzeugseitenneigung α den Kippwinkel γ um die Querkippachse XQ zu berücksichtigen.

Weiterhin umfasst die Vorrichtung 7 in einer möglichen Ausgestaltung eine Knickwinkelermittlungsvorrichtung 11 zur Ermittlung eines zwischen der Zugmaschine 2 und dem Sattelauflieger 3 ausgebildeten Knickwinkels β. In dieser Ausgestaltung ist die Steuervorrichtung 8 ausgebildet, bei der Ansteuerung des aktiven Fahrwerks 6 und/oder der Seitenkippvorrichtung zur Minimierung der Fahrzeugseitenneigung α den Knickwinkel β zu berücksichtigen.

Insbesondere ist die Steuervorrichtung 8 ausgebildet, in Abhängigkeit von bei der Initiierung des Kippvorgangs des Ladegutbehälters 4 um die Querkippachse XQ und/oder während des Kippvorgangs des Ladegutbehälters 4 um die Querkippachse XQ erfassten Werten der Fahrzeugseitenneigung α und/oder weiteren, eine Fahrzeugkippgefahr beeinflussenden Faktoren, die Fahrzeugkippgefahr zu ermitteln. Wenn die Fahrzeugkippgefahr einen vorgegebenen Schwellwert überschreitet, wird der Kippvorgang automatisch gestoppt, reversiert und/oder es wird eine entsprechende Information an einen Fahrzeugnutzer ausgegeben.

Bei der dargestellten Ausbildung des Fahrzeugs 1 als Sattelzug kann die Einstellung, insbesondere je nach Beschaffenheit des Untergrunds U, auch für die Zugmaschine 2 und den Sattelauflieger 3 getrennt erfolgen. Somit können auch unterschiedliche Seitenneigungen von Zugmaschine 2 und Sattelauflieger 3 ausgeglichen werden. Dies kann analog auch für andere mehrteilige Ausgestaltungen von Fahrzeugen 1, insbesondere Fahrzeuggespanne, durchgeführt werden.

In **Figur 4** ist eine Seitenansicht eines Sattelaufliegers 3 dargestellt, wobei der Sattelauflieger 3 Bestandteil eines in den Figuren 1 bis 3 beschriebenen Fahrzeugs 1 ist oder selbst ein solches Fahrzeug 1 bildet.

Der Sattelauflieger 3 umfasst den kippbaren Ladegutbehälter 4, das Fahrgestell 5 und zumindest einen Teil des aktiven Fahrwerks 6. Alternativ oder zusätzlich zum aktiven Fahrwerk 6 umfasst der Sattelauflieger 3 in nicht näher dargestellter Weise die Seitenkippvorrichtung.

Das aktive Fahrwerk 6 umfasst im dargestellten Ausführungsbeispiel ein Luftfedersystem 10 mit jeweils drei, beidseitig am Sattelauflieger 3 angeordneten Luftfederbälgen 10.1.

Beispielsweise können bei einer solchen Ausführung des aktiven Fahrwerks 6 in einfacher Weise die Luftfederbälge 10.1 mittels einer nicht gezeigten Ventilsteuerung zum Ausgleich der Fahrzeugseitenneigung α angesteuert werden. Dies kann dabei für die Luftfederbälge 10.1 einzeln oder in Gruppen, beispielsweise für jede Seite des Fahrzeugs 1 bzw. Sattelaufliegers 3, erfolgen. Bei dieser Ansteuerung erfolgt eine Zufuhr von Luft in zumindest einen Luftfederbalg 10.1 zum Anheben einer Seite des Fahrzeugs 1 bzw. Sattelaufliegers 3 und/oder ein Ablassen von Luft aus zumindest einem Luftfederbalg 10.1 zum Absenken einer Seite des Fahrzeugs 1 bzw. Sattelaufliegers 3.

### BEZUGSZEICHENLISTE

- 1: Fahrzeug
- 2: Zugmaschine
- 3: Sattelauflieger
- 4: Ladegutbehälter
- 5: Fahrgestell
- 6: aktives Fahrwerk
- 7: Vorrichtung
- 8: Steuervorrichtung
- 9: Neigungsermittlungsvorrichtung
- 9.1: Beschleunigungssensor
- 10: Luftfedersystem
- 10.1: Luftfederbalg
- 11: Knickwinkelermittlungsvorrichtung
- 12: Kippwinkelermittlungsvorrichtung

- U: Untergrund
- XB: Behälterquerachse
- XQ: Querkippachse
- Y: Fahrzeuglängsachse
- YB: Behälterlängsachse

- α: Fahrzeugseitenneigung
- β: Knickwinkel
- γ: Kippwinkel

## Patentansprüche

1. Fahrzeug (1), umfassend
- einen um eine zumindest im Wesentlichen parallel zu einer Behälterquerachse (XB) verlaufende Querkippachse (XQ) relativ zu einem Fahrgestell (5) kippbaren Ladegutbehälter (4) und
- eine Neigungsermittlungsvorrichtung (9) zur Ermittlung einer Fahrzeugseitenneigung (a) um eine Fahrzeuglängsachse (Y),
**gekennzeichnet durch**
- ein in seiner Höhe verstellbares aktives Fahrwerk (6) und eine Steuervorrichtung (8), welche ausgebildet ist, bei Initiierung eines Kippvorgangs des Ladegutbehälters (4) um die Querkippachse (XQ) in Abhängigkeit der Fahrzeugseitenneigung (a) das aktive Fahrwerk (6) zur Minimierung der Fahrzeugseitenneigung (a) anzusteuern, und/oder
- eine Seitenkippvorrichtung zum Kippen des Ladegutbehälters (4) zumindest im Wesentlichen parallel zu einer Behälterlängsachse (YB) relativ zum Fahrgestell (5) und eine Steuervorrichtung (8), welche ausgebildet ist, bei Initiierung des Kippvorgangs des Ladegutbehälters (4) um die Querkippachse (XQ) in Abhängigkeit der Fahrzeugseitenneigung (a) die Seitenkippvorrichtung zur Minimierung der Fahrzeugseitenneigung (a) anzusteuern.

2. Fahrzeug (1) nach Anspruch 1,
**dadurch gekennzeichnet, dass** das aktive Fahrwerk (6) hydraulisch, pneumatisch und/oder elektrisch in seiner Höhe verstellbar ist.

3. Fahrzeug (1) nach Anspruch 1 oder 2,
**dadurch gekennzeichnet, dass** das aktive Fahrwerk (6) ein Luftfedersystem (10) umfasst.

4. Fahrzeug (1) nach einem der vorhergehenden Ansprüche,
**dadurch gekennzeichnet, dass**
- die Seitenkippvorrichtung in zumindest ein zum Kippen des Ladegutbehälters (4) parallel zur Querkippachse (XQ) vorgesehenes Querkipplager integriert ist oder mit diesem in mechanischem Wirkzusammenhang steht oder bringbar ist und
- die Seitenkippvorrichtung ausgebildet ist, eine Position und/oder Ausrichtung des Querkipplagers relativ zum Fahrgestell (5) zu ändern.

5. Fahrzeug (1) nach einem der vorhergehenden Ansprüche,
**dadurch gekennzeichnet, dass**
- eine Zugmaschine (2) und ein Sattelauflieger (3) vorgesehen sind,
- der Sattelauflieger (3) den kippbaren Ladegutbehälter (4), das Fahrgestell (5) und zumindest einen Teil des aktiven Fahrwerks (6) und/oder die Seitenkippvorrichtung umfasst,
- eine Knickwinkelermittlungsvorrichtung (11) zur Ermittlung eines zwischen der Zugmaschine (2) und dem Sattelauflieger (3) ausgebildeten Knickwinkels (ß) vorgesehen ist und
- die Steuervorrichtung (8) ausgebildet ist, bei der Ansteuerung des aktiven Fahrwerks (6) und/oder der Seitenkippvorrichtung zur Minimierung der Fahrzeugseitenneigung (a) den Knickwinkel (ß) zu berücksichtigen.

6. Fahrzeug (1) nach einem der vorhergehenden Ansprüche,
**dadurch gekennzeichnet, dass**
- eine Kippwinkelermittlungsvorrichtung (12) zur Ermittlung eines Kippwinkels (y) des Ladegutbehälters (4) um die Querkippachse (XQ) vorgesehen ist und
- die Steuervorrichtung (8) ausgebildet ist, bei der Ansteuerung des aktiven Fahrwerks (6) und/oder der Seitenkippvorrichtung zur Minimierung der Fahrzeugseitenneigung (α) den Kippwinkel (y) um die Querkippachse (XQ) zu berücksichtigen.

7. Fahrzeug (1) nach einem der vorhergehenden Ansprüche,
**dadurch gekennzeichnet, dass**
- die Neigungsermittlungsvorrichtung (9) einen Beschleunigungssensor (9.1) zur Ermittlung einer Fahrzeugquerbeschleunigung umfasst und
- die Steuervorrichtung (8) ausgebildet ist, aus der Fahrzeugquerbeschleunigung die Fahrzeugseitenneigung (a) zu ermitteln.

8. Fahrzeug (1) nach einem der vorhergehenden Ansprüche,
**dadurch gekennzeichnet, dass** die Steuervorrichtung (8) ausgebildet ist,
- in Abhängigkeit von bei der Initiierung des Kippvorgangs des Ladegutbehälters (4) um die Querkippachse (XQ) und/oder während des Kippvorgangs des Ladegutbehälters (4) um die Querkippachse (XQ) erfassten Werten der Fahrzeugseitenneigung (a) und/oder weiteren, eine Fahrzeugkippgefahr beeinflussenden Faktoren, die Fahrzeugkippgefahr zu ermitteln und
- dann, wenn die Fahrzeugkippgefahr einen vorgegebenen Schwellwert überschreitet, den Kippvorgang automatisch zu stoppen, zu reversieren und/oder eine entsprechende Information auszugeben.

9. Verfahren zum Betrieb eines Fahrzeugs (1), wobei
- ein Ladegutbehälter (4) um eine zumindest im Wesentlichen parallel zu einer Behälterquerachse (XB) verlaufende Querkippachse (XQ) relativ zu einem Fahrgestell (5) kippbar ist und
- eine Fahrzeugseitenneigung (a) ermittelt wird,
**dadurch gekennzeichnet, dass** bei Initiierung eines Kippvorgangs des Ladegutbehälters (4) um die Querkippachse (XQ) und bei Überschreiten eines vorgegebenen Schwellwerts der Fahrzeugseitenneigung (a)
- mittels eines in seiner Höhe verstellbaren aktiven Fahrwerks (6) die Fahrzeugseitenneigung (a) verringert wird und/oder
- mittels einer Seitenkippvorrichtung der Ladegutbehälter (4) zumindest im Wesentlichen parallel zu einer Behälterlängsachse (YB) relativ zum Fahrgestell (5) entgegen der Fahrzeugseitenneigung (a) gekippt wird.

10. Verfahren nach Anspruch 9,
**dadurch gekennzeichnet, dass** das aktive Fahrwerk (6) hydraulisch, pneumatisch und/oder elektrisch in seiner Höhe verstellt wird.

11. Verfahren nach Anspruch 9 oder 10,
**dadurch gekennzeichnet, dass** mittels der Seitenkippvorrichtung eine Position und/oder Ausrichtung des Querkipplagers relativ zum Fahrgestell (5) geändert wird.

12. Verfahren nach einem der Ansprüche 9 bis 11,
**dadurch gekennzeichnet, dass**
- ein Knickwinkel (ß) zwischen einer Zugmaschine (2) und einem Sattelauflieger (3) des Fahrzeugs (1), welcher den kippbaren Ladegutbehälter (4), das Fahrgestell (5) und zumindest einen Teil des aktiven Fahrwerks (6) und/oder die Seitenkippvorrichtung umfasst, ermittelt wird und
- bei der Ansteuerung des aktiven Fahrwerks (6) und/oder der Seitenkippvorrichtung zur Minimierung der Fahrzeugseitenneigung (a) der Knickwinkel (ß) berücksichtigt wird.

13. Verfahren nach einem der Ansprüche 9 bis 12,
**dadurch gekennzeichnet, dass**
- ein Kippwinkel (y) des Ladegutbehälters um die Querkippachse (XQ) ermittelt wird und
- bei der Ansteuerung des aktiven Fahrwerks (6) und/oder der Seitenkippvorrichtung zur Minimierung der Fahrzeugseitenneigung (a) der Kippwinkel (y) berücksichtigt wird.

14. Verfahren nach einem der Ansprüche 9 bis 13,
**dadurch gekennzeichnet, dass** die Fahrzeugseitenneigung (a) anhand einer Fahrzeugquerbeschleunigung ermittelt wird.

15. Verfahren nach einem der Ansprüche 9 bis 14,
**dadurch gekennzeichnet, dass**
- bei der Initiierung des Kippvorgangs des Ladegutbehälters (4) um die Querkippachse (XQ) und/oder während des Kippvorgangs des Ladegutbehälters (4) um die Querkippachse (XQ) Werte der Fahrzeugseitenneigung (a) und/oder weitere, eine Fahrzeugkippgefahr beeinflussende Faktoren ermittelt werden,
- anhand der Werte der Fahrzeugseitenneigung (a) und/oder der weiteren Faktoren die Fahrzeugkippgefahr ermittelt wird und
- dann, wenn die Fahrzeugkippgefahr einen vorgegebenen Schwellwert überschreitet, der Kippvorgang automatisch gestoppt, reversiert und/oder eine entsprechende Information ausgegeben werden/wird.
